# FASCICULE DE BREVET EUROPEEN

(11) **EP 3 326 009 B1**
(45) Date de publication et mention de la délivrance du brevet: **06.04.2022**
(21) Numéro de dépôt: 16741593.4
(22) Date de dépôt: 15.07.2016
(51) Int. Cl.: G01T 1/24

(54) **DETECTEUR SOUS IRRADIATION DE PARTICULES NUCLEAIRES**
MIT NUKLEAREN TEILCHEN BESTRAHLTER DETEKTOR
DETECTOR IRRADIATED WITH NUCLEAR PARTICLES

(30) Priorité: 17.07.2015 FR 1556765
(43) Date de publication de la demande: 30.05.2018
(73) Titulaire: Centre National de la Recherche Scientifique CNRS, 75794 Paris Cedex 16 (FR); Université d'Aix Marseille, 13284 Marseille Cedex 07 (FR)
(72) Inventeur: VERVISCH, Wilfried Vivian Roland, 13680 Lancon de Provence (FR); VERVISCH EP HURTADO, Vanessa Laurence Jill, 13012 Marseille (FR); BIONDO, Stéphane, 13190 Allauch (FR); OTTAVIANI, Laurent James, 13012 Marseille (FR)
(74) Mandataire: Cabinet Camus Lebkiri
(86) Numéro de dépôt international: PCT/EP2016/066887
(87) Numéro de publication internationale: WO 2017/013006

(56) Documents cités:
- US-A- 3 013 156
- US-A- 4 393 025
- US-A1- 2005 056 791
- US-A1- 2011 233 421

## Description

### DOMAINE TECHNIQUE DE L'INVENTION

L'invention se rapporte à un détecteur sous irradiation de particules nucléaires, de préférence pour la détection de particules dans un environnement spécifique, i.e. sous irradiation soumis à des hautes températures, conditions sévères (pression, ambiance corrosive). Un tel détecteur a deux types d'applications potentielles : une qualitative, la sélectivité des particules, mais également quantitative, mesure du dépôt d'énergie i.e. la dosimétrie.

### ETAT DE LA TECHNIQUE ANTERIEURE

Aujourd'hui, la grande majorité des détecteurs sous irradiation de particules nucléaires sont sous forme de scintillateurs ou chambre d'ionisation. Ils ne sont pas constitués d'un capteur à base de semi-conducteur, comme du carbure de silicium. Au niveau du laboratoire, on trouve des capteurs munis d'un boitier de protection nécessitant un matériau métallique afin qu'il encapsule le capteur récoltant le signal électrique. Le signal électrique est ainsi exempt de toutes perturbations grâce au boitier métallique qui joue le rôle de cage de Faraday, mais aussi de protection hermétique du capteur vis-à-vis de l'environnement dans lequel il évolue (en immersion, sous pression, etc). En outre, un capteur à base de carbure de silicium, à l'inverse du silicium (matériau de base des capteurs semi-conducteurs) présente l'avantage de pouvoir travailler dans un environnement sévère, par exemple à haute température (en moyenne au-delà de 200°c) ou dans un environnement induisant de forts risques de corrosion.

Le capteur à base de semi-conducteur doit comporter des contacts électriques permettant de faire transiter le signal électrique d'un circuit électrique du capteur vers l'extérieur du détecteur. Actuellement, les contacts électriques se font exclusivement au moyen de soudure. Dans le cas d'un fonctionnement dans un environnement sous très haute température, c'est-à-dire au-delà de 200°C, les contacts électriques par soudure ne résistent pas, ou sur un laps de temps très réduit à une exposition à de telles températures. En outre, lorsqu'on ajoute à une telle température, l'humidité (par exemple lors de forages de puits de pétrole), les contacts électriques subissent les effets négatifs de la corrosion.

La demande de brevet US US2011/233421 A1 concerne un détecteur de rayonnement pour particules nucléaires comportant un moyen de connexion électrique comportant une première partie, dite anode, et une deuxième partie, dite cathode; un boitier métallique à l'intérieur duquel est positionné au moins une partie dudit moyen de connexion électrique; un capteur à base de semi-conducteur, ledit capteur étant encapsulé dans le boitier; le détecteur comportant également un moyen de fixation du capteur au boitier, ledit moyen de fixation comportant un matériau conducteur électrique, au moins une première partie du moyen de fixation étant reliée à l'anode au moyen d'une connexion électrique et étant en liaison amovible avec ledit capteur, au moins une deuxième partie du moyen de fixation étant reliée à la cathode au moyen de connexion électrique et étant en liaison amovible avec ledit capteur et en ce que la première partie du moyen de fixation comporte un élément mobile ayant une partie de sorte à exercer une pression mécanique sur le capteur de telle façon que le capteur soit maintenu en position.

### EXPOSE DE L'INVENTION

L'invention vise à remédier à tout ou partie des inconvénients de l'état de la technique identifiés ci-dessus, et notamment à proposer un détecteur de particules nucléaires sous irradiation pouvant résister à des températures très hautes, c'est-à-dire généralement supérieures à 500 °C, voire 600°C.

Dans ce dessein, un aspect de l'invention se rapporte à un détecteur adapté pour être sous irradiation de particules nucléaires selon la revendication 1 comportant :
- un moyen de connexion électrique comportant une première partie, dite anode, et une deuxième partie, dite cathode; - un boitier métallique à l'intérieur duquel est positionnée au moins une partie dudit moyen de connexion électrique; - un capteur à base de semi-conducteur, ledit capteur étant encapsulé dans le boitier; le détecteur comporte également un moyen de fixation du capteur au boitier, ledit moyen de fixation comportant un matériau conducteur électrique, au moins une première partie du moyen de fixation étant reliée à l'anode du moyen de connexion électrique et étant en liaison amovible avec ledit capteur, au moins une deuxième partie du moyen de fixation étant reliée à la cathode du moyen de connexion électrique et étant en liaison amovible avec ledit capteur et en ce que la première partie du moyen de fixation comporte un élément mobile ayant une partie précontrainte de sorte à exercer une pression mécanique sur le capteur de façon que le capteur soit maintenu en position et en ce que: - la deuxième partie du moyen de fixation comporte un premier support métallique relié à la cathode, une première surface du capteur étant adapté pour être contact avec une première surface du premier support, et - l'élément mobile de la première partie du moyen de fixation est entre: - une première position dans laquelle il exerce une pression mécanique sur une deuxième surface du capteur de façon à ce que le capteur soit maintenu en position entre le premier support métallique et l'élément mobile; et - une deuxième position dans laquelle il n'exerce pas de pression mécanique sur le capteur ;en ce que la première surface du premier support comporte un premier faisceau de pointes métalliques courtes et en ce que l'élément mobile comporte une première portion, ladite première portion étant adaptée pour être en contact avec la deuxième surface du capteur dans la première position de l'élément mobile, ladite première portion comportant un deuxième faisceau de pointes métalliques courtes.

Le circuit électrique du capteur est relié à un moyen de connexion électrique comportant une anode et une cathode du boitier afin de pouvoir faire remonter les informations électriques du capteur vers l'extérieur du boitier via le moyen de connexion électrique. Ainsi, par exemple les informations électriques peuvent être envoyées à un circuit d'amplification, à un convertisseur courant-tension, à un lecteur numérique/analogique, ou tout autre moyen de traitement du signal. En effet, ce sont les propriétés électriques du semi-conducteur qui varient en cas d'exposition à des particules nucléaires et cette variation se traduit par une évolution des informations électriques du circuit électrique du capteur en fonction des particules récoltées par le semi-conducteur. En effet, le capteur joue le rôle d'un générateur de puissance (tension, courant). Lorsque celui-ci récolte les particules, ces dernières provoquent la génération de porteurs de charge qui se traduit par un signal électrique sous forme de courant. L'utilisation d'un capteur à base de semi-conducteur, tel que le carbure de silicium ou le diamant ou le nitrure de gallium, lors de la détection de la présence de particules nucléaires en environnement à hautes températures est particulièrement adaptée. En outre, elle permet la miniaturisation ainsi qu'une rapidité de détection accrue. Un tel type de capteur à base de semi-conducteur est décrit dans la demande de brevet français FR14/63019 ou bien dans la demande de brevet international WO 2013/002697.

Le détecteur selon l'invention peut ainsi résister à des hautes (supérieures à 200°C), voire très hautes (supérieures à 400°C) températures du fait de la présence du moyen de fixation qui comporte une première et une deuxième partie en liaison amovible avec le capteur. Il est bien entendu que la réalisation d'une liaison au moyen d'une soudure n'est pas une liaison amovible et ne permet pas de fixer de manière amovible deux éléments. En outre, une fixation/liaison au moyen d'une soudure ne résiste pas à des hautes températures. En effet, la température minimale moyenne de fonte d'une soudure est de actuellement de l'ordre de 100°C. La température de fonte d'une soudure est fonction de la température de fusion du métal lors de la brasure très localisée entre le métal et la première couche métallique de contact au dessus du semi-conducteur. Cependant, cette température, doit être bien supérieure à la température d'utilisation du détecteur, ce qui engendre une dégradation sans équivoque du capteur. De plus techniquement à l'heure actuelle, cette soudure très précise et très localisée révèle un véritable verrou technologique. Le détecteur selon l'invention peut ainsi résister à une utilisation à température élevées, mais également avec un taux d'humidité élevée. En effet, les différents éléments électriques du détecteur, à savoir : anode, cathode, circuit électrique du capteur sont reliés les uns aux autres par liaison amovible par un matériau conducteur électrique de façon mécanique. Le moyen de fixation permet la tenue et la connexion électrique du capteur au sein du boitier.

Le boitier métallique comporte préférentiellement comme matériau métallique du Z30C60 ou du titane ou tout alliage métallique pouvant résister à des températures extrêmes, i.e. supérieures à 500°C. Le boitier a pour fonction d'encapsuler le capteur qui récolte un signal électrique. Du fait de l'encapsulation du capteur par le boitier, le signal électrique est exempt de perturbations électriques, ou électromagnétiques, car le boitier joue un rôle de cage de Faraday. En outre, l'encapsulation permet de protéger le capteur des agressions de l'environnement, extérieur au boitier.

Le boitier peut être de n'importe quelle forme si la forme du boitier permet d'épouser efficacement un milieu exigu. Par exemple, on peut réaliser des boitiers de forme cubique de moins de trois centimètres de côté pour la géoprospection ou géophysique appliquée. Les boitiers sont adaptables en fonction de la situation dans laquelle ils sont amenés à être utilisés. Ainsi, pour les cœurs de réacteurs nucléaires, ils pourraient être de forme cylindrique. Pour avoir une résistance maximale aux chocs, ils pourraient être de forme sphérique. Les formes sphériques ou cylindriques sont particulièrement bien adaptées pour assurer l'herméticité du détecteur. En effet, le vissage d'un boîtier cylindrique, ou sphérique est plus hermétique que le vissage d'un boitier de forme cubique. En effet, une bague circulaire est plus hermétique qu'une bague carrée. Ainsi, le boitier comportant préférentiellement deux parties, une première partie englobant au moins une portion d'une deuxième partie, les deux parties étant fixées l'une à l'autre au moyen d'un élément type bague de vissage.

Outre les caractéristiques principales qui viennent d'être mentionnées dans le paragraphe précédent, le détecteur selon l'invention peut présenter une ou plusieurs caractéristiques complémentaires parmi les suivantes, considérées individuellement ou selon les combinaisons techniquement possibles.

Avantageusement, la première partie du moyen de fixation est reliée de façon amovible à l'anode du moyen de connexion électrique et la deuxième partie du moyen de fixation est reliée de façon amovible à la cathode du moyen de connexion électrique. Il est bien entendu que la réalisation d'une liaison au moyen d'une soudure n'est pas une liaison amovible et ne permet pas de fixer de manière amovible deux éléments.

Avantageusement, la deuxième partie du moyen de fixation comporte un premier support métallique relié à la cathode, une première surface du capteur étant en contact avec une première surface du premier support, et la première partie du moyen de fixation comporte un élément mobile entre :
- une première position dans laquelle il exerce une pression mécanique sur une deuxième surface du capteur de façon à ce que le capteur soit maintenu en position entre le support métallique et l'élément mobile ; et
- une deuxième position dans laquelle il n'exerce pas de pression mécanique sur le capteur. Ainsi, en plus d'être amovible la liaison entre la deuxième partie du moyen de fixation et le capteur est mobile. Dans la deuxième position, le circuit est ouvert entre le capteur et l'anode, ainsi aucun courant ne peut circuler et l'information électrique du capteur ne peut pas être transmise vers l'anode, et potentiellement vers l'extérieur du boitier. Dans la première position, le circuit est fermé. Tous les éléments en contact et/ou en liaison amovible sont conducteurs électriques, ce qui permet d'assurer la transition d'un courant électrique au travers. En outre, la première position présente l'intérêt de pouvoir insérer le capteur dans sa loge lors de la fabrication ou du changement du capteur en fin de durée de vie du semi-conducteur tout en gardant le boitier métallique d'encapsulation.

Avantageusement, la première surface du premier support comporte un premier faisceau de pointes métalliques courtes et en ce que l'élément mobile comporte une première portion, ladite première portion étant adaptée pour être en contact avec la deuxième surface du capteur dans la première position de l'élément mobile, ladite première portion comportant un deuxième faisceau de pointes métalliques courtes. Les premier et deuxième faisceau de pointes métalliques courtes peuvent s'apparenter à des pointes semblables à un lit de fakir. Elles ont pour fonction de limiter les mauvaises rugosités entre les surfaces de contact des différents éléments qui peuvent altérer la conduction électrique. Les pointes métalliques sont préférentiellement espacées de quelques centaines de microns voire dizaine de microns ou moins selon l'efficacité de l'outil de gravure du métal. Les pointes métalliques permettent d'obtenir une multitude de contacts par pression se comportant comme des résistances en parallèle, et donc améliorant la conductivité.

Avantageusement, le premier support métallique est flexible ce qui permet de diminuer les contraintes mécaniques lors du passage de l'élément mobile de la première position à la deuxième position.

Avantageusement, le détecteur comporte un élément en céramique, ledit élément étant disposé dans le boitier de façon à isoler électriquement l'anode de la cathode. L'élément en céramique permet l'isolation électrique entre l'anode et la cathode, et ce même à très haute température.

De façon particulièrement avantageuse, l'élément en céramique est une bague en céramique disposée dans le capteur de façon à entourer le premier support métallique. Le fait que le premier support métallique soit entouré par la bague en céramique permet d'assurer une bonne stabilité mécanique du premier support, et donc du capteur auquel il est relié, ainsi qu'une robustesse aux éventuels chocs, tout en assurant une bonne isolation électrique des éléments.

De façon particulièrement avantageuse, le matériau métallique constituant le boitier est choisi pour jouer un rôle de filtre de particules nucléaires. Ainsi, par exemple, une enveloppe conséquente de plomb peut absorber les rayons X, une enveloppe de cadmium arrêtera les neutrons thermiques ...

De façon particulièrement avantageuse, le boitier du détecteur comporte un premier gaz. Le premier gaz peut ainsi jouer un rôle de filtre ou de ralentisseur et donc participer à la transformation des particules venues de l'extérieur du boitier. Par exemple, l'hydrogène ou le méthane ralentissent les neutrons rapides.

De façon particulièrement avantageuse, le boitier comporte un premier bouchon d'alimentation en gaz de l'intérieur du boitier et un deuxième bouchon de purge du gaz. Le premier bouchon permet l'introduction de gaz à l'intérieur du boitier. Le deuxième bouchon permet de vider l'intérieur du boitier de gaz. Tout ceci correspond à un système de purge du boitier.

De façon particulièrement avantageuse, le boitier comporte :
- une première face, ladite première face comportant au moins une première prise mâle, ladite première prise mâle comportant une première extrémité logée à l'intérieur du boitier reliée à l'anode dudit détecteur et une deuxième extrémité adaptée pour coopérer avec une prise femelle d'un autre détecteur complémentaire de ladite première prise mâle ;
- une deuxième face, ladite deuxième face comportant au moins une première prise femelle, ladite première prise femelle comportant une première extrémité logée à l'intérieur du boitier et reliée à la première prise mâle de la première face dudit détecteur et une deuxième extrémité adaptée pour coopérer avec une prise mâle d'un autre détecteur complémentaire de ladite première prise femelle.

La présence d'une première prise mâle et d'une première prise femelle permet l'interconnexion électrique de plusieurs détecteurs entre eux et ainsi de faire transiter l'information électrique entre des détecteurs. Ainsi, il est possible de connecter plusieurs détecteurs les uns aux autres, comme des wagons d'un train. On pourrait ainsi associer à un détecteur une fonction de filtrage d'un type de particules en particulier, différent des autres types de particules pouvant être détectés par les autres capteurs d'autres détecteurs. Cette fonction de filtrage se fait par exemple en fonction du gaz à l'intérieur du boitier, ou bien du type de métal constituant ledit boitier, ou du type de capteur semi-conducteur réalisé. L 'ensemble de ces détecteurs permet d'obtenir un système complet de lecture des particules sous cette forme de pixellisation.

De façon particulièrement avantageuse, la première face du boitier comporte un premier pas de vis pouvant coopérer avec un deuxième filetage d'une face d'un autre détecteur ; et la deuxième face du boitier comporte un premier filetage pouvant coopérer avec un deuxième pas de vis d'un autre détecteur. Ceci permet de s'assurer que les prises mâles et femelles d'un boitier sont libres dans un mouvement de rotation, ce qui permet de visser des détecteurs, via leurs boitiers, les uns aux autres.

L'invention se rapporte également à un ensemble pour la détection sous irradiation de particules nucléaires, ledit ensemble comportant un premier détecteur selon l'un des modes de réalisation précédemment décrits, un deuxième détecteur selon l'un des modes de réalisation précédemment décrits, ledit premier détecteur comportant une face comportant une prise mâle, ladite prise mâle comportant une extrémité logée à l'intérieur du boitier et reliée à l'anode dudit premier détecteur et une deuxième extrémité adaptée pour coopérer avec une première prise femelle du deuxième détecteur complémentaire de la prise mâle ; ledit deuxième détecteur comportant :
- une deuxième face comportant une prise femelle, ladite prise femelle du deuxième détecteur comportant une extrémité logée à l'intérieur du boitier et reliée à une prise mâle d'une face dudit deuxième détecteur et une deuxième extrémité adaptée pour coopérer avec la prise mâle du premier détecteur ;
- une première face comportant :
   - une prise mâle, ladite prise mâle comportant une extrémité logée à l'intérieur du boitier et reliée à la prise femelle de la deuxième face dudit deuxième détecteur et une deuxième extrémité adaptée pour coopérer avec une première prise femelle du deuxième détecteur complémentaire de la prise mâle ;
   - une deuxième prise mâle, ladite deuxième prise mâle comportant une extrémité logée à l'intérieur du boitier et reliée à l'anode dudit deuxième détecteur et une deuxième extrémité adaptée pour coopérer avec une prise femelle d'un troisième détecteur complémentaire de la deuxième prise mâle du deuxième détecteur..

De façon particulièrement avantageuse, le boitier du premier détecteur comporte un premier gaz et le boitier du deuxième détecteur comporte un deuxième gaz.

L'invention se rapporte également à un système pour la détection sous irradiation de particules nucléaires, ledit système comportant : un détecteur selon l'un des modes de réalisation précédemment décrits, une première enveloppe comportant de la céramique englobant ledit détecteur, une deuxième enveloppe comportant de la céramique englobant ladite première enveloppe de façon à ce qu'un espace existe entre la première enveloppe et la deuxième enveloppe, ledit espace comportant une couche comportant un premier métal. La première enveloppe et la deuxième enveloppe comportant de la céramique joue un rôle d'isolation thermique afin de protéger le détecteur, ainsi que le premier métal des hautes, voire très hautes températures.

De façon particulièrement avantageuse, le premier métal est du cadmium. Le cadmium joue un rôle de convertisseur et permet de s'affranchir de l'influence de neutrons thermiques afin de ne laisser passer à l'intérieur du boitier que les particules gammas.

### BREVE DESCRIPTION DES FIGURES

D'autres caractéristiques et avantages de l'invention ressortiront à la lecture de la description qui suit, en référence aux figures annexées, qui illustrent :
- la figure 1, une vue schématique en coupe selon la longueur d'un détecteur selon un premier mode de réalisation de l'invention ;
- la figure 2, une vue schématique en coupe selon la largeur du détecteur de la figure 1 ;
- la figure 3A, une vue schématique d'un système de détection selon un mode de réalisation de l'invention et la figure 3B, un agrandissement de la zone encerclée sur la figure 3A ;
- la figure 4, une vue schématique d'un boitier d'un détecteur selon un mode de réalisation de l'invention ;
- les figures 5A à 5C, une vue schématique de différents détecteurs selon différents modes de réalisation de l'invention ;
- la figure 6, une vue schématique de deux détecteurs selon un mode de réalisation de l'invention, pouvant s'interconnecter ;
- la figure 7A, une vue de face d'une face d'un boitier d'un détecteur selon un mode de réalisation de l'invention et la figure 7B, une vue de face d'une deuxième face d'un boitier d'un détecteur selon un mode de réalisation de l'invention ;
- la figure 8, une vue en coupe de la zone d'interconnexion entre une face d'un premier détecteur et une deuxième face d'un deuxième détecteur selon un mode de réalisation de l'invention,
- la figure 9A, une vue schématique d'un ensemble pour la détection sous irradiation de particules nucléaires, ledit ensemble comportant une pluralité de détecteurs ;
- la figure 9B, une vue schématique des connexions électriques entre les détecteurs de la pluralité de détecteurs de l'ensemble de la figure 9A.

Pour plus de clarté, les éléments identiques ou similaires sont repérés par des signes de référence identiques sur l'ensemble des figures.

### DESCRIPTION DETAILLEE D'UN MODE DE REALISATION

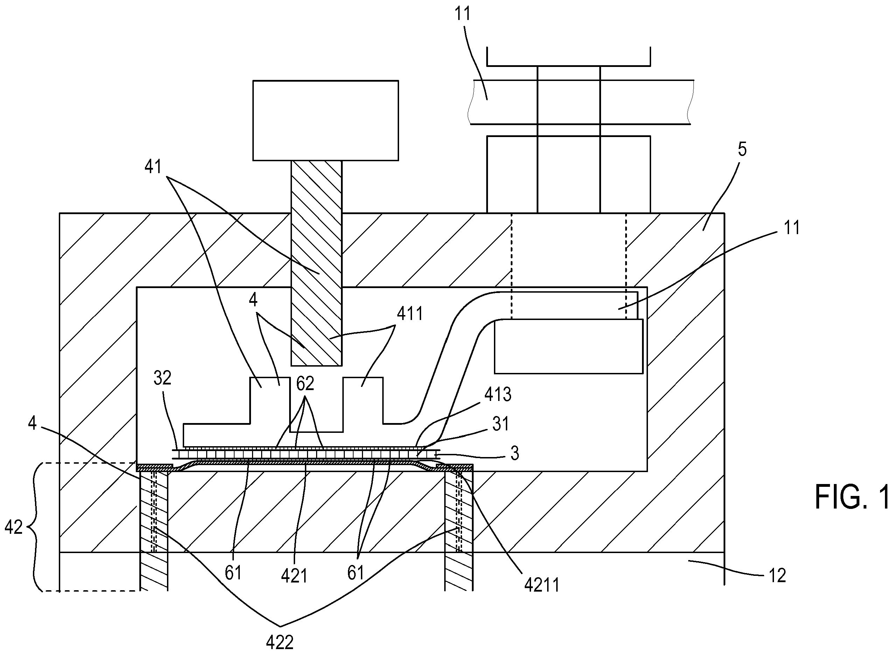

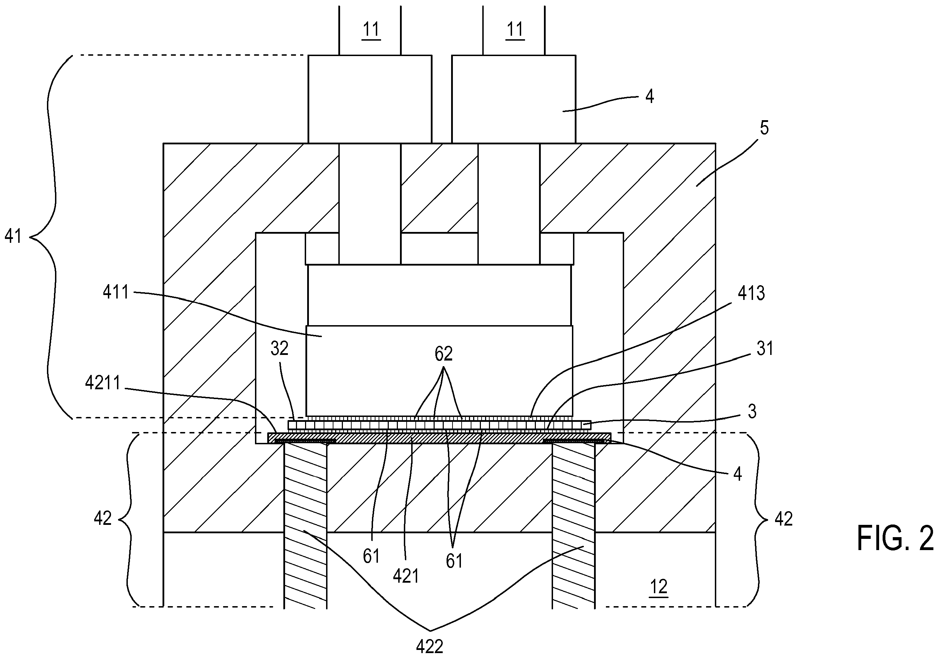

Les figures 1 (vue en coupe longueur) et 2 (vue en coupe largeur) du détecteur mettent en évidence un moyen de connexion électrique comportant une première partie 11, dite anode et une deuxième partie 12, dite cathode. Le boitier de chacun des détecteurs est peu visible sur les figures 1 et 2 (partie 12). Seuls sont principalement visibles l'intérieur de ces boitiers.

Le détecteur des figures 1 et 2 comporte également un capteur 3 à base de semi-conducteur comportant un premier circuit électrique et encapsulé dans le boitier. Le détecteur des figures 1 et 2 montre également un moyen de fixation 4 comportant un matériau conducteur électrique, cuivre, aluminium par exemple. Une première partie 41 du moyen de fixation est reliée à l'anode 11 du moyen de connexion électrique et est en liaison amovible avec le capteur 3. Une deuxième partie 42 du moyen de fixation est reliée à la cathode 12 du moyen de connexion électrique et est en liaison amovible avec ledit capteur. La deuxième partie du moyen de fixation comporte un premier support métallique 421, en cuivre par exemple, reliée à la cathode 12 au moyen de vis 422 et en contact amovible avec une première surface 31 du capteur.

Dans l'exemple de la figure 1, comme dans la figure 2 les vis sont en métal. C'est la partie 5 qui isole le tout et est constitué de céramique. Dans l'exemple des figures 1 et 2, les vis sont en matériau conducteur électrique et font directement la liaison électrique entre le support et la cathode 12.

La première partie du moyen de fixation comporte un élément 411 mobile entre :
- une première position (visible à la figure 1) dans laquelle il exerce une pression mécanique sur une deuxième surface 32 du capteur de façon à ce que le capteur soit maintenu en position entre le premier support métallique et l'élément mobile. On voit bien à la figure 2 que le capteur est comme pris en sandwich entre l'élément mobile et le premier support métallique ; et
- une deuxième position (non visible), dans laquelle il n'exerce pas de pression mécanique sur le capteur. On imagine bien que l'élément mobile, du type vis + élement en F, 411 de la figure 1 est en position sur la figure 1 car l'élément en F exerce une pression mécanique grâce à sa forme précontrainte. C'est précisément la forme en F qui exerce la pression, la position sans pression sur le capteur se réalise lorsque la vis vient piéger la forme en F et la remonte par le fait de visser cette pièce.

Sur les figures 1 et 2, il est visible que la première surface 4211 du premier support comporte un premier faisceau de pointes métalliques 61 courtes et l'élément mobile comporte une première portion 413 adaptée pour être en contact (contact visible dans la première position, visible à la figure 1) avec la deuxième surface 32 du capteur dans la première position de l'élément mobile. Cette première portion 413 comporte un deuxième faisceau de pointes métalliques 62. Le premier et le deuxième faisceau permettent d'assurer un contact électrique, et mécanique, du fait de leur caractère conducteur électrique, entre le capteur et les éléments entre lesquels il est maintenu en position sandwich dans la première position de l'élément mobile, sans tenir compte d'éventuelles disparités de surface.

Sur les figures 1 et 2, est visible un élément 5 en céramique. L'élément 5 en céramique joue un rôle d'isolant électrique entre la partie anode 11 du moyen de connexion électrique et la partie cathode 12 du boitier d'encapsulation. Il est visible sur les figures 1 et 2 que l'élément 5 en céramique a une forme de bague entourant le capteur et le premier support métallique.

L'élément mobile illustré à la figure 1 comporte une vis et un élément en forme de F. L'élément en forme de F est mobile de façon à venir s'appuyer contre le capteur et la vis est déplaçable en translation de façon à relever l'élément en forme de F afin d'assurer un remplacement du capteur. Il est essentiel de souligner que la vis du système 411 n'appuie pas sur le la forme en F et donc sur le capteur. Les contacts anode cathode par l'intermédiaire des contacts métalliques 411 et 421 doivent assurer certes une stabilité mécanique, mais doivent également garantir une certaine souplesse des contacts afin d'éviter toutes contraintes mécaniques exagérées pour ne pas détériorer le capteur en carbure de silicium. C'est la raison pour laquelle il est proposé de telles formes en F ainsi que la forme de la plaquette métallique 421.

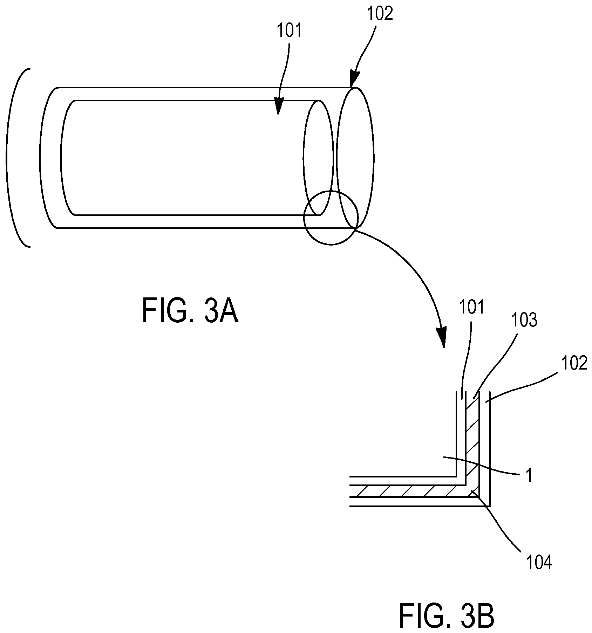

Aux figures 3A et 3B est illustré un boitier (vue extérieure) avec un système 10 comportant un détecteur 1, une première enveloppe 101 enveloppant le détecteur (ce dernier n'est pas visible à la figure 3A), une deuxième enveloppe 102 englobant la première enveloppe 101 de façon à ce qu'un espace 103 existe entre la première enveloppe 101 et la deuxième enveloppe 102. L'espace 103 comporte une couche 104 comportant un premier métal, par exemple du cadmium qui est ductile à haute température. La première enveloppe et la deuxième enveloppe comporte de la céramique de façon à assurer un rôle d'isolation thermique de façon à ce que la couche de métal ne fonde pas, par exemple, à haute température. Cette couche en cadmium sert de filtre à particules.

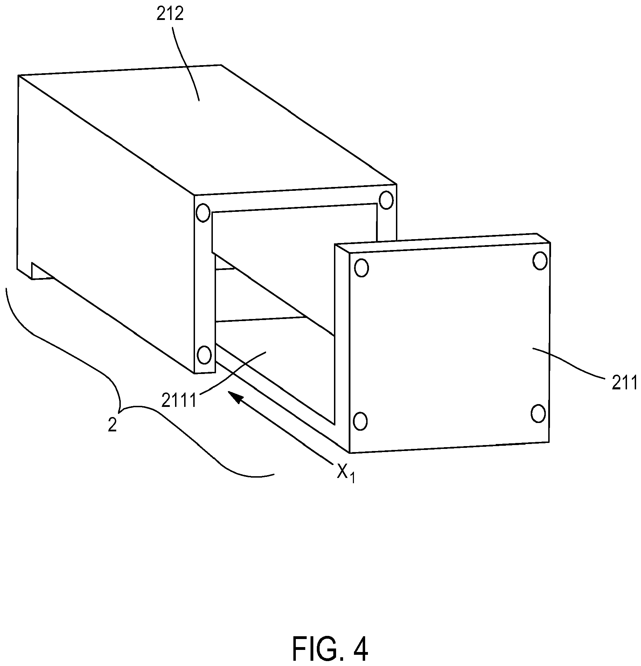

La figure 4 illustre un exemple de réalisation d'un boitier 1. Le boitier 2 comporte une première partie 211 pouvant s'insérer tel un tiroir, par translation selon un premier axe X1, à l'intérieur d'une deuxième partie 212 du boitier. La première partie comporte un premier socle 2111 pour accueillir un capteur et ses fixations ( par exemple un capteur et ses fixations tel que représenté aux figures 1 et 2), de façon à ce que, lorsque la première partie 211 du boitier est insérée à l'intérieur de la deuxième partie 212 du boitier, le capteur soit encapsulé dans le boitier 1.

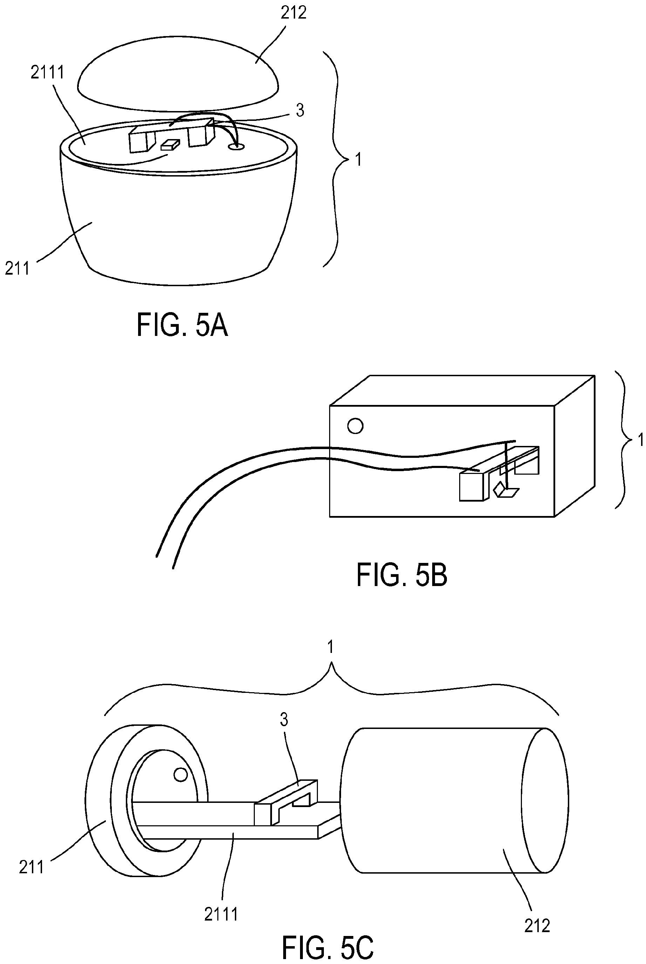

Les figures 5A à 5C présentent différentes formes d'un détecteur 1.

Le boitier 2 de la figure 5A a une forme sphérique. Dans cet exemple sphérique, le boitier 2 comporte une première portion 211 pouvant se visser à une deuxième portion 212 du boitier de façon à ce que le capteur 3 qui se trouve sur le support 2111 de la première portion 211 du boitier 2 soit encapsulé dans le boitier.

Le boitier de la figure 5B a une forme cubique, semblable à la forme du boitier décrit à la figure 4.

Le boitier de la figure 5C a une forme cylindrique. Dans cet exemple cylindrique, le boitier 2 comporte une première portion 211 pouvant se visser à une deuxième portion 212 du boitier de façon à ce que le capteur sur un socle 2111 soit encapsulé dans le boitier 2.

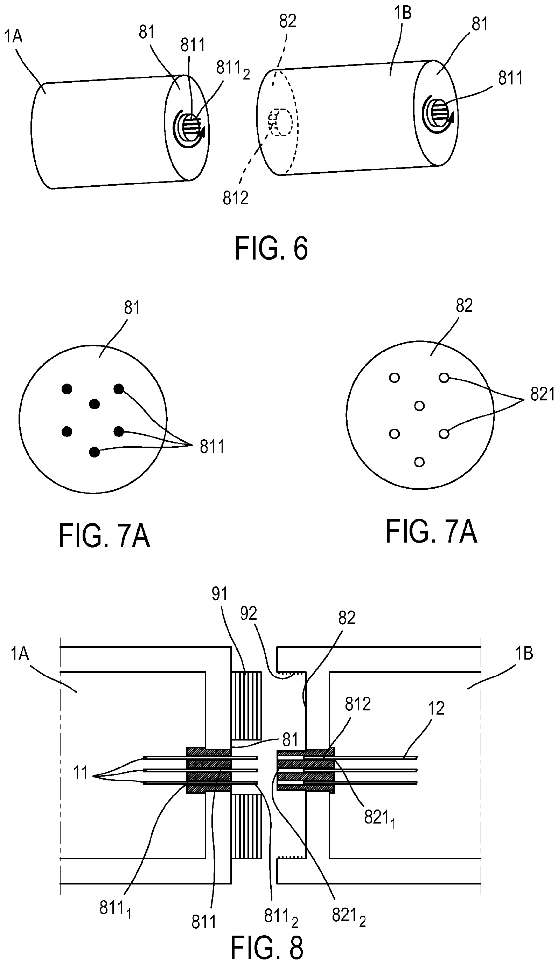

La figure 6 représente un ensemble pour la détection sous irradiation de particules nucléaires comportant un premier détecteur 1A, un deuxième détecteur 1B, tous deux de formes cylindriques.

Chacun des premier 1A et deuxième 1B détecteur comporte :
- une première face 81 comportant au moins une première prise mâle 811 ;
- une deuxième face 82 comportant au moins une première prise femelle 812.

La première prise mâle 811 du premier détecteur 1A comporte une première extrémité (non visible) logée à l'intérieur du boitier et reliée à l'anode du premier détecteur et une deuxième extrémité 811₂ adaptée pour coopérer avec la deuxième prise femelle 812 du deuxième détecteur 1B. Ainsi un signal électrique peut circuler entre le premier détecteur 1A et le deuxième détecteur 1B.

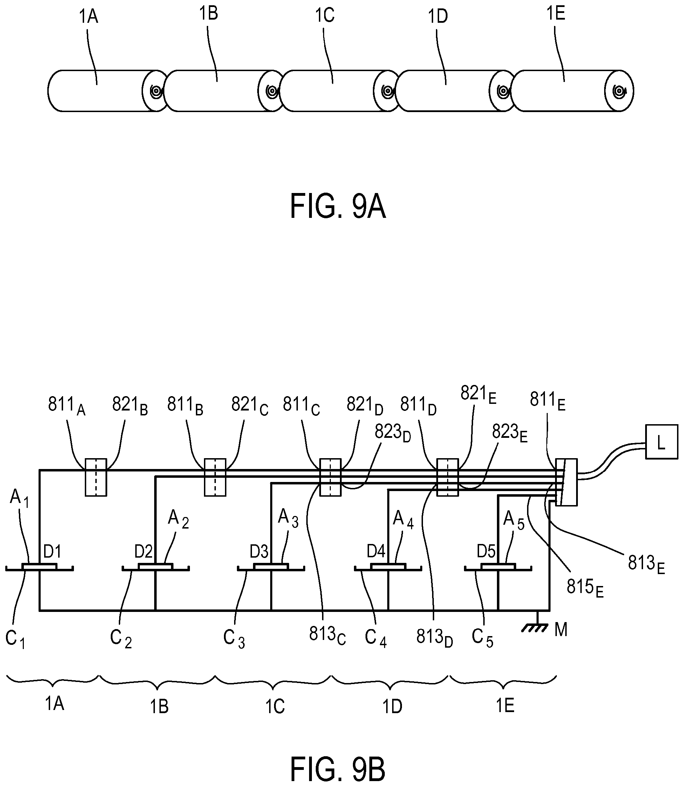

La figure 7A représente une première face 81 d'un détecteur comportant plusieurs prises mâles 811 (plusieurs anodes) et une deuxième face d'un détecteur comportant plusieurs prises mâles 812. Tel qu'illustré à la figure 6, les premières et deuxièmes faces d'un détecteur sont opposées l'une par rapport à l'autre. Elles peuvent être positionnées d'une tout autre manière en ligne ou en colonne ou en croix (cela dépend fortement de l'encombrement lié au nombre de pixels). L'avantage technique de la présence de cette pluralité de prises mâles/femelles sera mieux compris en référence aux figures 9A et 9B décrites par la suite.

La figure 8 représente une vue agrandie de la possibilité d'interconnexion entre le premier détecteur 1A de la figure 6 et le deuxième détecteur 1B de la figure 6. Y sont visibles :
- la première face 81 du boitier du premier détecteur 1A comportant trois prises mâles 811. Chacune de ces prises mâles comporte une première extrémité 811₁ logée à l'intérieur du boitier reliée à une anode 11 et une deuxième extrémité 811₂ à l'extérieur du boitier ;
- la deuxième face 82 du boitier du deuxième détecteur 1B comportant trois prises femelles 812. Chacune de ces prises femelles comporte une première extrémité 812₁ logée à l'intérieur du boitier reliée à une cathode 11 et une deuxième extrémité 821₂ à l'extérieur du boitier.

La deuxième extrémité 811₂ des prises mâles 811 de la première face 81 du premier détecteur 1A est adaptée pour s'insérer à l'intérieur de la deuxième extrémité 821₂ de la deuxième face du deuxième détecteur 1B de façon à assurer une liaison électrique entre le premier détecteur et le deuxième détecteur.

La première face du boitier du premier détecteur comporte un premier pas de vis 91 adaptée pour coopérer avec un deuxième filetage 92 du deuxième détecteur.

La figure 9A représente un ensemble pour la détection sous irradiation de particules nucléaires comportant une pluralité de détecteur 1A, 1B, 1C, 1D, 1E, chacun des détecteurs comportant un capteur. Il est à noter que chacun des détecteurs comporte plusieurs prises males/femelles qui sont aussi nombreuses qu'il y aura de détecteur dans un système avec leur encapsulation. Chaque prise male/femelle correspond à l'anode d'un détecteur d'un tel ensemble. Un tel système est dit système en wagons. Il présente l'avantage de permettre la connexion de plusieurs détecteurs, chaque détecteur pouvant assurer une fonction différente des autres du fait par exemple du gaz à l'intérieur du détecteur, du matériau constituant le détecteur, du type de capteur implanté dans le détecteur etc. Il sera possible aussi d'envisager l'insertion d'un circuit électronique à l'intérieur d'un de ces « wagons » qui viendrait récolter tous ces signaux électriques provenant de chaque anodes et de les traiter directement à l'intérieur d'une de ces encapsulations, dit « boitier-circuit ». On pourrait même envisager également qu'un de ces boitiers pourrait être dédié à l'émission de ces signaux vers l'extérieur via une connexion sans fil, un boitier dit « boitier-antenne ».

La figure 9B représente les connexions électriques entre les différents éléments des différents détecteurs, et notamment entre les différents capteurs, ces derniers étant la source de l'information électrique permettant la détection de particules. Il y a cinq capteurs D1, D2, D3, D4 et D5 représentés sur la figure 9B correspondant aux cinq détecteurs 1A, 1B, 1C, 1D, 1E représentés à la figure 9A.

Chacun des capteurs comporte une anode Ai et une cathode Ci, i étant compris entre 1 et 5. Les cathodes C1, C2, C3, C4 et C5 sont reliées au boitier de chacun des détecteurs, ces derniers jouant le rôle de masse M. Il est visible sur le schéma de la figure 9B qui représente l'ensemble des détecteurs une fois connectés les uns aux autres que les masses sont interconnectées. En effet, les boitiers encapsulant les capteurs des détecteurs sont interconnectés et jouent le rôle de masse M à laquelle sont reliées les cathodes des capteurs.

L'anode A1 du premier détecteur est reliée à une première prise mâle 811A d'une première face du premier détecteur 1A. La première prise mâle 811A coopère avec la première prise femelle 821B d'une première face du deuxième détecteur 1B. La première prise femelle 821B de la première face du deuxième détecteur 1B est reliée à la première prise mâle 811B de la deuxième face du deuxième détecteur 1B. La première prise mâle 811B du deuxième détecteur coopère avec la première prise femelle 821C d'une première face du troisième détecteur 1C. La première prise femelle 821C de la face du deuxième détecteur 1B est reliée à la première prise mâle 811C de la deuxième face du troisième détecteur 1C. La première prise mâle 811C du troisième détecteur coopère avec la première prise femelle 821D d'une première face du quatrième détecteur 1D. La première prise femelle 821D de la première face du quatrième détecteur 1D est reliée à la première prise mâle 811D de la deuxième face du quatrième détecteur 1D. La première prise mâle 811D du quatrième détecteur 1D coopère avec la première prise femelle 821E d'une première face du cinquième détecteur 1E. La première prise femelle 821E de la première face du cinquième détecteur 1E est reliée à la première prise mâle 811E de la deuxième face du cinquième détecteur 1E. La première prise mâle 811E du cinquième détecteur 1E est reliée à un dispositif de lecture L des informations électriques ayant transitées depuis l'anode A1 du premier détecteur jusqu'à la première prise mâle 811E du cinquième détecteur 1E et donc au dispositif de lecture. Ainsi, l'information de l'anode A1 du premier détecteur 1A a transité au travers de tous les détecteurs de l'ensemble qui forme un système en wagon.

Prenons maintenant l'anode A3 du troisième capteur C3 du troisième détecteur 1C. L'anode A3 du troisième détecteur 1C est reliée à une troisième prise mâle 813C du troisième détecteur 1C. La troisième prise mâle 813C du troisième détecteur 1C coopère avec une troisième prise femelle 823D du quatrième détecteur 1D. La troisième prise femelle 823D du quatrième détecteur 1D est reliée à une troisième prise mâle 813D du quatrième détecteur 1D. La troisième prise mâle 813D du quatrième détecteur 1D coopère avec une troisième prise femelle 823E du cinquième détecteur 1E. La troisième prise femelle 823E du cinquième détecteur 1E est reliée à une troisième prise mâle 813E du cinquième détecteur 1D. La cinquième prise mâle 811E du cinquième détecteur 1E est reliée au dispositif de lecture L des informations électriques ayant transitées depuis l'anode A3 du troisième détecteur jusqu'à la troisième prise mâle 813E du cinquième détecteur 1E et donc au dispositif de lecture. Ainsi, l'information de l'anode A3 du troisième détecteur 1E a transité au travers des détecteurs de l'ensemble entre le troisième détecteur et le dernier détecteur étant relié au dispositif de lecture, au travers ainsi d'un système en wagon.

Toutes les anodes de chacun des cinq détecteurs sont reliées de la même façon jusqu'au dispositif de lecture L, ou du « boitier-circuit » pour un « boitier-antenne ». Seule l'anode A5 du cinquième détecteur, i.e. du dernier détecteur du système en wagon étant relié au dispositif de lecture, est connecté directement au dispositif de lecture au moyen d'une cinquième prise mâle 815E du cinquième détecteur 1E à laquelle elle est reliée.

Nous pouvons voir ici plusieurs prises males/femelles qui sont aussi nombreuses qu'il y aura de détecteur dans un système avec leur encapsulation. Chaque prise male/femelle correspond à l'anode d'un détecteur d'un ensemble comportant plusieurs détecteurs tel que décrit en référence aux figures 9A et 9B.

L'invention n'est pas limitée aux modes de réalisation précédemment décrits en référence aux figures et des variantes pourraient être envisagées sans sortir du cadre de l'invention, qui est définie par les revendications annexées.

## Revendications

1. Détecteur (1) de rayonnement adapté pour être irradié par des particules nucléaires comportant :
- un moyen de connexion électrique comportant une première partie (11), dite anode, et une deuxième partie (12), dite cathode ;
- un boitier (2) métallique à l'intérieur duquel est positionnée au moins une partie dudit moyen de connexion électrique ;
- un capteur (3) à base de semi-conducteur, ledit capteur étant encapsulé dans le boitier ; et
**caractérisé en ce que** le détecteur comporte également un moyen de fixation (4) du capteur au boitier, ledit moyen de fixation comportant un matériau conducteur électrique, au moins une première partie (41) du moyen de fixation étant reliée à l'anode du moyen de connexion électrique et étant en liaison amovible avec ledit capteur, au moins une deuxième partie (42) du moyen de fixation étant reliée à la cathode du moyen de connexion électrique et étant en liaison amovible avec ledit capteur et **en ce que** la première partie (41) du moyen de fixation comporte un élément mobile (411) ayant une partie précontrainte de sorte à exercer une pression mécanique sur le capteur (3) de façon que le capteur soit maintenu en position et
**en ce que**:
- la deuxième partie du moyen de fixation comporte un premier support (421) métallique relié à la cathode, une première surface (31) du capteur étant adapté pour être contact avec une première surface du premier support, et
- l'élément mobile (411) de la première partie du moyen de fixation est entre :
- une première position dans laquelle il exerce une pression mécanique sur une deuxième surface (32) du capteur de façon à ce que le capteur soit maintenu en position entre le premier support métallique et l'élément mobile ; et
- une deuxième position dans laquelle il n'exerce pas de pression mécanique sur le capteur ;
**en ce que** la première surface (4211) du premier support comporte un premier faisceau de pointes métalliques (61) courtes et **en ce que** l'élément mobile comporte une première portion (413), ladite première portion étant adaptée pour être en contact avec la deuxième surface du capteur dans la première position de l'élément mobile, ladite première portion comportant un deuxième faisceau de pointes métalliques (62) courtes.

2. Détecteur selon la revendication précédente **caractérisé en ce que** la première partie du moyen de fixation est reliée de façon amovible à l'anode du moyen de connexion électrique et **en ce que** la deuxième partie du moyen de fixation est reliée de façon amovible à la cathode du moyen de connexion électrique.

3. Détecteur selon l'une quelconque des revendications précédentes **caractérisé en ce que** le premier support métallique est flexible.

4. Détecteur selon l'une quelconque des revendications précédentes **caractérisé en ce qu'**il comporte un élément (5) en céramique, ledit élément étant disposé dans le boitier de façon à isoler électriquement l'anode de la cathode.

5. Détecteur selon la revendication précédente **caractérisé en ce que** l'élément en céramique est une bague en céramique disposée dans le boitier de façon à entourer le premier support métallique.

6. Détecteur selon l'une quelconque des revendications précédentes **caractérisé en ce que** le boitier comporte un premier gaz.

7. Détecteur selon l'une quelconque des revendications précédentes **caractérisé en ce que** le boitier comporte :
- une première face (81), ladite première face comportant au moins une première prise mâle (811), ladite première prise mâle comportant une première extrémité (811₁) logée à l'intérieur du boitier et reliée à l'anode (11) dudit détecteur et une deuxième extrémité (811₂) adaptée pour coopérer avec une prise femelle d'un autre détecteur complémentaire de la première prise mâle ;
- une deuxième face (82), ladite deuxième face comportant au moins une première prise femelle (821), ladite première prise femelle comportant une première extrémité (821₁) logée à l'intérieur du boitier et reliée à la première prise mâle de la première face (12) dudit détecteur et une deuxième extrémité (821₂) adaptée pour coopérer avec une prise mâle d'un autre détecteur complémentaire de la première prise femelle.

8. Ensemble pour la détection de particules nucléaires, ledit ensemble comportant :
- un premier détecteur (1A) selon l'une quelconque des revendications précédentes,
- un deuxième détecteur (1B) selon l'une quelconque des revendications précédentes,
ledit premier détecteur comportant une première face comportant une première prise mâle, ladite première prise mâle comportant une première extrémité logée à l'intérieur du boitier et reliée à l'anode dudit premier détecteur et une deuxième extrémité adaptée pour coopérer avec une première prise femelle du deuxième détecteur complémentaire de la première prise mâle ;
ledit deuxième détecteur comportant :
- une deuxième face comportant une première prise femelle, ladite première prise femelle du deuxième détecteur comportant une première extrémité logée à l'intérieur du boitier et reliée à une prise mâle d'une face dudit deuxième détecteur et une deuxième extrémité adaptée pour coopérer avec la prise mâle du premier détecteur ;
- une première face comportant :
- une première prise mâle, ladite première prise mâle comportant une extrémité logée à l'intérieur du boitier et reliée à la première prise femelle de la deuxième face dudit deuxième détecteur et une deuxième extrémité adaptée pour coopérer avec une première prise femelle du deuxième détecteur complémentaire de la première prise mâle ;
- une deuxième prise mâle, ladite deuxième prise mâle comportant une première extrémité logée à l'intérieur du boitier et reliée à l'anode dudit deuxième détecteur et une deuxième extrémité adaptée pour coopérer avec une prise femelle d'un troisième détecteur complémentaire de la deuxième prise mâle du deuxième détecteur.

9. Ensemble selon la revendication précédente **caractérisé en ce que** le boitier du premier détecteur comporte un premier gaz et le boitier du deuxième détecteur comporte un deuxième gaz.

10. Système (10) pour la détection de particules nucléaires, ledit système comportant :
- un détecteur selon l'une quelconque des revendications 1 à 7,
- une première enveloppe (101) comportant de la céramique englobant ledit détecteur,
- une deuxième enveloppe (102) comportant de la céramique englobant ladite première enveloppe de façon à ce qu'un espace (103) existe entre la première enveloppe et la deuxième enveloppe, ledit espace comportant une couche (104) comportant un premier métal.

## Patentansprüche

1. Strahlungsdetektor (1), der geeignet ist, von nuklearen Partikeln bestrahlt zu sein, umfassend:
- ein elektrisches Anschlussmittel, umfassend einen ersten Teil (1), bezeichnet als Anode, und einen zweiten Teil (12), bezeichnet als Kathode,
- ein Metallgehäuse (2), in dessen Innern wenigstens ein Teil des genannten elektrischen Anschlussmittels angeordnet ist;
- einen Sensor (3) auf Halbleiterbasis, wobei der genannte Sensor im Gehäuse verkapselt ist; und
**dadurch gekennzeichnet, dass** der Sensor ebenfalls ein Befestigungsmittel (4) des Sensors am Gehäuse umfasst, wobei das genannte Befestigungsmittel ein elektrisch leitendes Material umfasst, wobei wenigstens ein erster Teil (41) des Befestigungsmittels mit der Anode des elektrischen Anschlussmittels verbunden ist und in abnehmbarer Verbindung mit dem genannten Sensor ist, wobei wenigstens ein zweiter Teil (42) des Befestigungsmittels mit der Kathode des elektrischen Anschlussmittels verbunden ist und in abnehmbarer Verbindung mit dem genannten Sensor ist und dass der erste Teil (41) des Befestigungsmittels ein mobiles Element (411) umfasst, das einen vorgespannten Teil derart umfasst, dass ein mechanischer Druck auf den Sensor (3) derart ausgeübt ist, dass der Sensor in Position gehalten und dass:
- der zweite Teil des Befestigungsmittels einen ersten Metallträger (421) umfasst, der mit der Kathode verbunden ist, wobei eine erste Fläche (31) des Sensors geeignet ist, um mit einer ersten Fläche des ersten Trägers in Kontakt zu sein, und
- das mobile Element (411) des ersten Teils des Befestigungsmittels ist zwischen:
- einer ersten Position, in der es einen mechanischen Druck auf eine zweite Fläche (32) des Sensors derart ausübt, dass der Sensor zwischen dem ersten Metallträger und dem mobilen Element in Position gehalten ist; und
- einer zweiten Position, in der er es keinen mechanischen Druck auf den Sensor ausübt, ist:
dass die erste Fläche (4211) des ersten Trägers ein erstes Bündel von kurzen Metallpunkten (61) umfasst und dass das mobile Element einen ersten Abschnitt (413) umfasst, wobei der genannte erste Abschnitt geeignet ist, um mit der zweiten Fläche des Sensors in der ersten Position des mobilen Elements in Kontakt zu sein, wobei der erste Abschnitt ein zweites Bündel von kurzen Metallpunkten (62) umfasst.

2. Detektor gemäß dem voranstehenden Anspruch, **dadurch gekennzeichnet, dass** der erste Teil des Befestigungsmittels abnehmbar mit der Anode des elektrischen Anschlussmittels verbunden ist und dass der zweite Teil des Befestigungsmittels abnehmbar mit der Kathode des elektrischen Anschlussmittels befestigt ist.

3. Detektor gemäß irgendeinem der voranstehenden Ansprüche, **dadurch gekennzeichnet, dass** der erste Metallträger flexibel ist.

4. Detektor gemäß irgendeinem der voranstehenden Ansprüche, **dadurch gekennzeichnet, dass** er ein Element (5) aus Keramik umfasst, wobei das genannte Element derart in dem Gehäuse angeordnet ist, dass es die Anode der Kathode elektrisch isoliert.

5. Detektor gemäß dem voranstehenden Anspruch, **dadurch gekennzeichnet, dass** das Element aus Keramik ein Ring aus Keramik ist, der derart in dem Gehäuse angeordnet ist, dass er den ersten Metallträger umringt.

6. Detektor gemäß irgendeinem der voranstehenden Ansprüche, **dadurch gekennzeichnet, dass** das Gehäuse ein erstes Gas umfasst.

7. Detektor gemäß irgendeinem der voranstehenden Ansprüche, **dadurch gekennzeichnet, dass** das Gehäuse umfasst:
- eine erste Seite (81), wobei die genannte erste Seite wenigstens einen ersten Stecker (811) umfasst, wobei der genannte erste Stecker ein erstes Ende (811₁), das im Innern des Gehäuses untergebracht und mit der Anode (11) des genannten Detektors verbunden ist, und ein zweites Ende (811₂), das zum Zusammenwirken mit einer Buchse eines anderen, komplementären Detektors des ersten Steckers geeignet ist, umfasst;
- eine zweite Seite (82), wobei die genannte zweite Seite wenigstens eine erste Buchse (821) umfasst; wobei die genannte erste Buchse ein erstes Ende (821₁), das im Innern des Gehäuses untergebracht und mit dem ersten Stecker der ersten Seite (12) des genannten Detektors verbunden ist, und ein zweites Ende (821₂), das geeignet ist, um mit einem Stecker eines anderen komplementären Detektors der ersten Buchse zusammenzuwirken, umfasst.

8. Gruppe zur Detektion von nuklearen Partikeln, wobei die genannte Gruppe umfasst:
- einen ersten Detektor (1A) gemäß irgendeinem der voranstehenden Ansprüche,
- einen zweiten Detektor (1B) gemäß irgendeinem der voranstehenden Ansprüche
wobei der genannte erste Detektor eine erste Seite umfasst, umfassend einen ersten Stecker, wobei der genannte erste Stecker ein erstes Ende, das im Innern des Gehäuses untergebracht und mit der Anode des genannten ersten Detektors verbunden ist, und ein zweites Ende, das zum Zusammenwirken mit einer ersten Buchse des zweiten komplementären Detektors des ersten Steckers geeignet ist, umfasst;
wobei der zweite Detektor umfasst:
- eine zweite Seite, die eine erste Buchse umfasst, wobei die genannte erste Buchse des zweiten Detektors ein erstes Ende, das im Innern des Gehäuses untergebracht und mit einem Stecker einer Seite des genannten zweiten Detektors verbunden ist, und ein zweites Ende, das zum Zusammenwirken mit dem Stecker des ersten Detektors geeignet ist, umfasst;
- eine erste Seite, umfassend;
- einen ersten Stecker, wobei der genannte erste Stecker ein Ende, das im Innern des Gehäuses untergebracht und mit der ersten Buchse der zweiten Seite des genannten zweiten Detektors verbunden ist, und ein zweites Ende, das zum Zusammenwirken mit einer ersten Buchse des zweiten komplementären Detektors des ersten Steckers geeignet ist, umfasst;
- einen zweiten Stecker, wobei der genannte zweite Stecker ein erstes Ende, das im Innern des Gehäuses untergebracht und mit der Anode des genannten zweiten Detektors verbunden ist, und ein zweites Ende, das zum Zusammenwirken mit einer Buchse eines dritten komplementären Detektors des zweiten Steckers des zweiten Detektors geeignet ist, umfasst.

9. Gruppe gemäß dem voranstehenden Anspruch, **dadurch gekennzeichnet, dass** das Gehäuse des ersten Detektors ein erstes Gas umfasst und das Gehäuse des zweiten Detektors ein zweites Gas umfasst.

10. System (10) zur Detektion von nuklearen Partikeln, wobei das genannte System umfasst:
- einen Detektor gemäß irgendeinem der Ansprüche 1 bis 7,
- eine erste Verschalung (101), umfassend Keramik, die den genannten Detektor umgibt,
- eine zweite Verschalung (102), umfassend Keramik, die die genannte erste Verschaltung derart umgibt, dass zwischen der ersten Verschalung und der zweiten Verschaltung ein Raum (103) vorhanden ist, wobei der genannte Raum eine Schicht (104) umfasst, die ein erstes Metall umfasst.

## Claims

1. Radiation detector (1) adapted to be irradiated by nuclear particles, which comprises:
- an electrical connection means comprising a first portion (11), referred to as an anode, and a second portion (12), referred to as a cathode;
- a metal housing (2), inside of which at least one portion of said electrical connection means is positioned;
- a semi-conductor sensor (3), said sensor being encapsulated in the housing; and **characterised in that** the detector comprises a means (4) for attaching the sensor to the housing, said attachment means comprising an electrically conductive material, at least one first portion (41) of the attachment means being connected to the anode of the electrical connection means and being removably linked to said sensor, at least one second portion (42) of the attachment means being connected to the cathode of the electrical connection means and being removably linked to said sensor and **in that** the first portion (41) of the attachment means comprises a moveable component (411) having a pre-stressed part so as to exert a mechanical pressure on the sensor so that the sensor is maintained in position and **in that**:
- the second portion of the attachment means comprises a first metal support (421) connected to the cathode, a first surface (31) of the sensor being adapted to be in contact with a first surface of the first support, and
- the moveable component (411) of the first portion of the attachment means is between:
- a first position, in which it exerts a mechanical pressure on a second surface (32) of the sensor in such a way that the sensor is maintained in position between the first metal support and the moveable component; and
- a second position, in which it does not exert mechanical pressure on the sensor;
and **in that** the first surface (4211) of the first support comprises a first bundle of short metal spikes (61) and **in that** the moveable component comprises a first portion (413), said first portion being adapted to be in contact with the second surface of the sensor in the first position of the moveable component, said first portion comprising a second bundle of short metal spikes (62).

2. Detector according to the preceding claim **characterised in that** the first portion of the attachment means is linked in a removable manner to the anode of the electrical connection means and **in that** the second portion of the attachment means is linked in a removable manner to the cathode of the electrical connection means.

3. Detector according to any of claims 3 to 4 **characterised in that** the first metal support is flexible.

4. Detector according to any of the preceding claims **characterised in that** it comprises a ceramic component (5), said component being arranged in the housing in such a way as to electrically insulate the anode from the cathode.

5. Detector according to the preceding claim **characterised in that** the ceramic component is a ceramic ring arranged in the housing in such a way as to surround the first metal support.

6. Detector according to any of the preceding claims **characterised in that** the housing comprises a first gas.

7. Detector according to any of the preceding claims **characterised in that** the housing comprises:
- a first face (81), said first face comprising at least one first male socket (811), said first male socket comprising a first end (811₁) housed inside the housing and connected to the anode (11) of said detector and a second end (811₂) adapted to cooperate with a female socket of another additional detector of the first male socket;
- a second face (82), said second face comprising at least one first female socket (821), said first female socket comprising a first end (821₁) housed inside the housing and connected to the first male socket of the first face (12) of said detector and a second end (821₂) adapted to cooperate with a male socket of another additional detector of the first female socket.

8. Assembly for the detection of nuclear particles, said assembly comprising:
- a first detector (1A) according to any of the preceding claims,
- a second detector (1B) according to any of the preceding claims,
said first detector comprising a first face comprising a first male socket, said first male socket comprising a first end housed inside the housing and connected to the anode of said first detector and a second end adapted to cooperate with a first female socket of the second additional detector of the first male socket;
said second detector comprising:
- a second face comprising a first female socket, said first female socket of the second detector comprising a first end housed inside the housing and connected to a male socket of one face of said second detector and a second end adapted to cooperate with the male socket of the first detector;
- a first face comprising:
- a first male socket, said first male socket comprising one end housed inside the housing and connected to the first female socket of the second face of said second detector and a second end adapted to cooperate with a first female socket of the second additional detector of the first male socket;
- a second male socket, said second male socket comprising a first end housed inside the housing and connected to the anode of said second detector and a second end adapted to cooperate with a female socket of a third additional detector of the second male socket of the second detector.

9. Assembly according to the preceding claim **characterised in that** the housing of the first detector comprises a first gas and the housing of the second detector comprises a second gas.

10. System (10) for the detection of nuclear particles, said system comprising:
- a detector according to any of claims 1 to 7,
- a first jacket (101) comprising ceramic encompassing said detector,
- a second jacket (102) comprising ceramic encompassing said first jacket in such a way that a space (103) exists between the first jacket and the second jacket, said space comprising a layer (104) comprising a first metal.
